# DEMANDE DE BREVET EUROPEEN

(11) **EP 4 187 141 A1**
(43) Date de publication de la demande: **31.05.2023**
(21) Numéro de dépôt: 22207216.7
(22) Date de dépôt: 14.11.2022
(51) Int. Cl.: F17C 3/04, F17C 11/00, F17C 13/12

(54) **RÉSERVOIR A HYDROGÈNE POURVU D'UN SYSTÈME DE CAPTURE D'HYDROGÈNE GAZEUX**

(30) Priorité: 25.11.2021 FR 2112478
(71) Demandeur: Airbus SAS, 31700 Blagnac (FR)
(72) Inventeur: PETIOT, Caroline, 31700 BLAGNAC (FR); BECHTEL, Stéphane, 31700 BLAGNAC (FR)
(74) Mandataire: Gevers & Orès

(57) **Abrégé**

- Le réservoir (1) à hydrogène, de préférence un réservoir pour le stockage d'hydrogène liquide à basse pression en condition cryogénique, comporte au moins un système (2) de capture d'hydrogène gazeux, ce système (2) étant pourvu de charges absorbantes (5) aptes à capturer l'hydrogène gazeux, les charges absorbantes (5) étant liées à au moins une partie d'une paroi (3) du réservoir (1) et/ou à une peau agencée sur une face externe (3A) du réservoir (1) et/ou à une enveloppe externe destinée à mettre en œuvre une fonction auxiliaire, le système (2) présentant une masse réduite et étant apte à retenir et à stocker de l'hydrogène gazeux qui pourrait s'échapper dudit réservoir (1) de manière à l'empêcher de se répandre dans l'environnement dudit réservoir (1), l'hydrogène gazeux capturé pouvant être restitué postérieurement par ledit système (2).

## Description

### Domaine technique

La présente invention concerne un réservoir à hydrogène, en particulier un réservoir à hydrogène liquide, pourvu d'un système de capture d'hydrogène gazeux comprenant des charges absorbantes, ainsi qu'un procédé de restitution d'hydrogène gazeux capturé par les charges absorbantes du réservoir à hydrogène.

### Etat de la technique

Bien que non exclusivement, la présente invention s'applique plus particulièrement à un réservoir à hydrogène liquide, et notamment à un réservoir à hydrogène liquide équipant un aéronef et en particulier un avion de transport.

On sait que l'hydrogène à température et pression ambiantes se présente sous forme gazeuse. Cet état gazeux n'est pas adapté au stockage dans ce type d'application puisque, l'hydrogène étant peu dense, il implique de prévoir un très grand volume de réservoir ou une pression élevée pour pouvoir contenir une quantité importante d'hydrogène. Une solution pour remédier à ce problème consiste à stocker l'hydrogène à l'état liquide, en le maintenant à très basse température (à -253°C), dans un conteneur hermétiquement clos, l'hydrogène étant un composant particulièrement volatil.

Dans le cas d'un réservoir à hydrogène liquide pour un aéronef pour lequel la masse est un facteur non négligeable, il peut être envisagé d'utiliser un matériau composite au lieu d'un métal pour réaliser la paroi du réservoir. Toutefois, dans le cadre du développement d'une structure en matériau composite stratifié pour une paroi d'un réservoir destiné au stockage d'hydrogène liquide, le risque de fuite engendré par les chargements thermomécaniques répétés qui créent de l'endommagement (fissuration transverse, solubilité matricielle), apparaît particulièrement délicat vis à vis de l'évaporation de l'hydrogène.

De l'hydrogène gazeux libéré de façon incontrôlée pourrait présenter un danger pour la sécurité, en raison notamment de l'instabilité de ce gaz dans l'environnement extérieur au réservoir. Dans ce contexte, il apparaît nécessaire d'empêcher que des atomes d'hydrogène s'échappant d'un réservoir présentant des fuites ne se retrouvent dans l'atmosphère de l'aéronef, ce qui serait en effet fâcheux à la fois pour l'aéronef et pour les passagers.

Il existe peu de solutions qui permettent d'atteindre cet objectif, tout en ayant une masse acceptable pour une utilisation sur un aéronef. Les solutions usuelles pour le stockage d'hydrogène terrestre reposent, généralement, sur un principe dynamique avec un système intégré dans une double enveloppe de réservoir, qui réalise une purge dynamique sous conditions de pression (incluant le vide) pour évacuer l'hydrogène vers l'extérieur. Ces solutions usuelles nécessitent une action permanente de drainage qui peut poser des problèmes de maintenance des équipements de purge, d'alimentation par une source électrique ou autre, et de fuite. Ces solutions usuelles ne sont donc pas complètement satisfaisantes pour une utilisation sur un aéronef.

Il existe donc un besoin de disposer d'une solution permettant de récupérer l'hydrogène gazeux qui pourrait s'échapper d'un réservoir à hydrogène, tout en présentant une masse réduite et acceptable pour les applications envisagées.

### Exposé de l'invention

La présente invention concerne un réservoir à hydrogène, en particulier un réservoir à hydrogène liquide, notamment pour un aéronef, permettant de répondre à ce besoin.

Pour ce faire, selon l'invention, le réservoir à hydrogène comporte au moins un système de capture d'hydrogène gazeux pourvu de charges absorbantes aptes à capturer de l'hydrogène gazeux.

Ainsi, grâce à l'invention, on prévoit, au niveau du réservoir à hydrogène, des charges absorbantes précisées ci-dessous, qui sont aptes à absorber, c'est-à-dire à retenir et à stocker, de l'hydrogène gazeux qui pourrait s'échapper dudit réservoir de manière à l'empêcher de se répandre dans l'environnement du réservoir, par exemple dans un aéronef dans le cas d'un réservoir à hydrogène d'un aéronef. De plus, par l'utilisation de charges absorbantes, la masse du système de capture d'hydrogène gazeux est réduite du fait de la taille nanométrique associée à une faible densité, et elle est notamment acceptable pour l'application envisagée sur un aéronef. Le système de capture d'hydrogène gazeux présente également d'autres avantages précisés ci-dessous, dont la possibilité de contrôler le débit des fuites et/ou de restituer l'hydrogène gazeux capturé.

Dans le cadre de la présente invention, le système de capture d'hydrogène gazeux, c'est-à-dire les charges absorbantes, peut être agencé à différents endroits par rapport au réservoir, en particulier dans une paroi du réservoir, sur le réservoir et/ou autour du réservoir, comme précisé ci-dessous.

Dans un premier mode de réalisation, au moins certaines desdites charges absorbantes sont liées à au moins une partie d'une paroi du réservoir, en étant en particulier soit noyées dans la paroi, soit intégrées dans la surface externe de la paroi.

De plus, dans un deuxième mode de réalisation, en variante ou en complément dudit premier mode de réalisation, au moins certaines desdites charges absorbantes sont liées à une peau (ou voile) agencée sur au moins une partie d'une face externe du réservoir.

En outre, dans un troisième mode de réalisation, en variante ou en complément desdits premier et deuxième modes de réalisation, le réservoir à hydrogène comporte une enveloppe externe destinée à mettre en oeuvre une fonction auxiliaire, notamment une fonction d'isolation thermique, et au moins certaines desdites charges absorbantes sont liées à au moins une partie de ladite enveloppe externe.

Par ailleurs, dans un mode de réalisation préféré, le réservoir à hydrogène comporte au moins un matériau composite (pourvu de fibres et de résine), au niveau de la paroi, d'une peau et/ou d'une enveloppe externe (notamment d'isolation thermique). Dans ce mode de réalisation préféré, avantageusement :
- au moins certaines desdites charges absorbantes sont intégrées dans au moins certaines des fibres du matériau composite, à savoir dans la matière des fibres ou à la surface des fibres ; et/ou
- au moins certaines desdites charges absorbantes sont noyées dans la résine ; et/ou
- au moins certaines desdites charges absorbantes sont déposées sur au moins une surface du matériau composite.

Par ailleurs, dans un mode de réalisation particulier, pour lequel le réservoir à hydrogène comporte au moins un composite stratifié pourvu d'au moins une couche de composite formée de plis, avantageusement :
- au moins certaines desdites charges absorbantes sont intégrées dans au moins une couche absorbante agencée entre deux plis successifs de la couche de composite ; et/ou
- au moins certaines desdites charges absorbantes sont directement intégrées dans au moins l'un desdits plis.

En outre, dans un mode de réalisation particulier, le système de capture d'hydrogène gazeux comporte des particules de polymères thermodurcissables ou thermoplastiques qui intègrent les charges absorbantes.

Par ailleurs, de façon avantageuse, les charges absorbantes sont réparties uniformément.

En outre, avantageusement, les charges absorbantes présentent une efficacité variable en fonction de la température, la température au niveau du réservoir à hydrogène est variable et est comprise dans une gamme de températures, et les charges absorbantes sont agencées au niveau du réservoir à des localisations où la température est telle que les charges absorbantes présentent l'efficacité la plus élevée pour ladite gamme de températures.

Par ailleurs, de façon avantageuse, les charges absorbantes, qui correspondent à des constituants poreux présentant une surface spécifique élevée, sont réalisées dans au moins l'un des matériaux suivants : des éléments carbonés poreux, des charpentes organiques métalliques, des charpentes organiques covalentes.

La présente invention concerne également un procédé de restitution d'hydrogène gazeux capturé par des charges absorbantes d'un réservoir à hydrogène tel que celui décrit ci-dessus.

Selon l'invention, ledit procédé comprend au moins une étape de restitution consistant à amener le système de capture d'hydrogène gazeux (pourvu des charges absorbantes) du réservoir à hydrogène dans des conditions générant une libération de l'hydrogène gazeux absorbé antérieurement par lesdites charges absorbantes.

Avantageusement, l'étape de restitution comprend au moins l'une des opérations suivantes, mise en œuvre au moins sur le système de capture d'hydrogène gazeux :
- une opération d'augmentation de la température ;
- une opération de réduction de la pression ;
- une opération de diffusion d'un gaz, de préférence neutre ;
- une opération conduisant à la modification de la polarité de la paroi interne de pores des charges absorbantes poreuses.

### Brève description des figures

Les figures annexées feront bien comprendre comment l'invention peut être réalisée. Sur ces figures, des références identiques désignent des éléments semblables.
La figure 1 est une vue schématique, en coupe transversale, d'un réservoir à hydrogène pourvu d'un système de capture d'hydrogène gazeux agencé dans une paroi du réservoir.
La figure 2 est une vue schématique, en coupe transversale, d'un réservoir à hydrogène pourvu d'un système de capture d'hydrogène gazeux agencé dans une peau recouvrant la paroi du réservoir.
La figure 3 est une vue similaire à celle de la figure 1 dont le réservoir comprend, de plus, un système de capture d'hydrogène gazeux agencé dans une enveloppe externe d'isolation thermique.
La figure 4 est une vue partielle, en perspective, d'un matériau composite comprenant des charges absorbantes.
La figure 5 est une vue schématique, partielle et en coupe, d'un composite stratifié pourvu d'une pluralité de plis, comprenant des charges absorbantes intégrées dans l'un desdits plis.
La figure 6 est une vue schématique, partielle et en coupe, d'un composite stratifié pourvu d'une pluralité de plis, comprenant des couches absorbantes pourvues de charges absorbantes, qui sont agencées à chaque fois entre deux plis successifs.

### Description détaillée

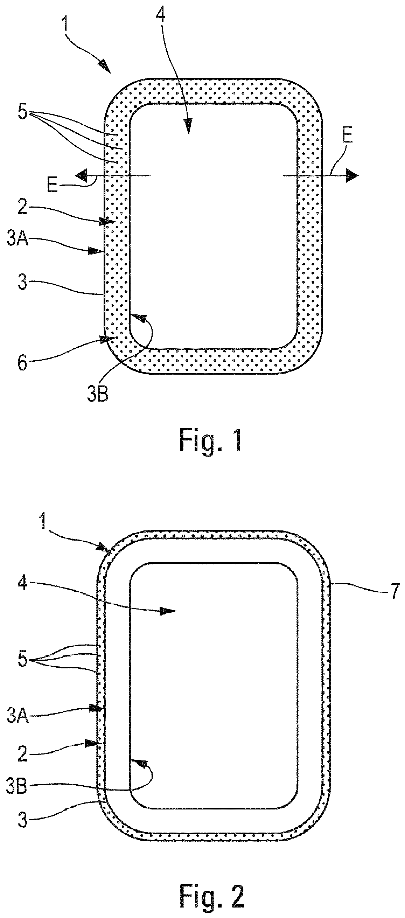

Le réservoir 1 représenté schématiquement dans des modes de réalisation particuliers sur les figures 1 à 3 et permettant d'illustrer l'invention, est un réservoir à hydrogène qui est pourvu d'au moins un système 2 de capture d'hydrogène gazeux.

Bien que non exclusivement, le réservoir 1 est de préférence un réservoir à hydrogène liquide pour le stockage de l'hydrogène liquide à basse pression en condition cryogénique. Un tel réservoir à hydrogène liquide est, notamment, adapté pour équiper un engin mobile fonctionnant, au moins partiellement, à l'hydrogène. De manière préférée, le réservoir 1 est destiné à équiper un aéronef (non représenté), en particulier un avion de transport.

Comme représenté très schématiquement sur la figure 1, le réservoir 1 est pourvu d'une paroi 3 délimitant, par sa face interne 3B, un espace interne 4 fermé. Cet espace interne 4 clos est apte à recevoir de l'hydrogène, et notamment de l'hydrogène liquide. Le réservoir 1 comporte également tous les moyens usuels qui sont nécessaires à son fonctionnement. Ces moyens usuels ne faisant pas directement partie de l'objet de l'invention, ne sont pas représentés et ne sont pas décrits davantage.

Dans la description suivante, on entend par « externe » à l'extérieur ou vers l'extérieur du réservoir 1, dans le sens illustré par des flèches E sur la figure 1, et par « interne » à l'intérieur ou vers l'intérieur du réservoir 1, dans le sens opposé au sens des flèches E.

Selon l'invention, le réservoir 1 comporte un ou plusieurs systèmes 2 de capture d'hydrogène gazeux. Chaque système 2 de capture d'hydrogène gazeux est pourvu de charges absorbantes 5. Ces charges absorbantes 5 sont des constituants (c'est-à-dire des éléments individuels ou particules) qui présentent simultanément une porosité élevée et une surface spécifique élevée. On sait que ces caractéristiques (de porosité et de surface d'échange élevées), lorsqu'elles sont associées à des caractéristiques chimiques particulières (pour les constituants) permettant une interaction chimique avec l'hydrogène, créent une capacité de capture de l'hydrogène gazeux.

Dans le cadre de la présente invention, le système 2 de capture d'hydrogène gazeux, c'est-à-dire les charges absorbantes 5, peut être agencé à différents endroits par rapport au réservoir 1, et en particulier dans au moins une partie de la paroi 3 du réservoir 1, sur le réservoir 1 ou autour du réservoir 1, comme précisé ci-dessous.

De préférence, les charges absorbantes 5, non directement intégrées dans la paroi 3 du réservoir 1, sont agencées au plus près dudit réservoir 1 (à hydrogène) de manière à absorber l'hydrogène gazeux s'échappant du réservoir 1 en cas de fuites de ce dernier.

Ainsi, on prévoit au niveau du réservoir 1 (à hydrogène) des charges absorbantes 5, qui sont aptes à absorber, c'est-à-dire à retenir et à stocker, de l'hydrogène gazeux qui aurait pu s'échapper dudit réservoir 1 de manière à l'empêcher de se répandre dans l'environnement du réservoir 1, par exemple dans un aéronef dans le cas d'un réservoir à hydrogène d'un aéronef. De plus, par l'utilisation de charges absorbantes 5, la masse du système 2 de capture d'hydrogène gazeux est réduite, et notamment acceptable pour l'application envisagée sur un aéronef. Le système 2 de capture d'hydrogène gazeux présente d'autres avantages précisés ci-dessous.

Les charges absorbantes 5 sont donc des constituants présentant une grande surface spécifique. Il est connu que les matériaux à l'état solide qui comprennent des pores de taille typiquement inférieure à 9 Å, combinés à une surface spécifique élevée et une activation de surface spécifique, présentent les niveaux de stockage d'hydrogène les plus élevés.

Dans un mode de réalisation préféré, les charges absorbantes 5 sont réalisées dans l'un des matériaux suivants présentant une surface spécifique d'échange importante : des éléments carbonés poreux, des charpentes organiques métalliques, des charpentes organiques covalentes.

Il est connu que, grâce aux effets combinés d'une surface spécifique élevée et d'une porosité élevée, le charbon actif (ou carbone activé) présente une capacité élevée de stockage gravimétrique d'hydrogène gazeux. Le carbone activé peut, par exemple, être issu d'une préparation à partir d'acétate de cellulose.

En outre, les charpentes (ou réseaux) organiques covalentes COF (pour « Covalent Organic Framework » en anglais) représentent une classe de matériaux qui forment des structures bidimensionnelles ou tridimensionnelles par des réactions entre des précurseurs organiques résultant en des liaisons covalentes fortes pour former des matériaux poreux, stables et cristallins.

Par ailleurs, les charpentes (ou réseaux) organiques métalliques MOF (pour « Metal-Organic Framework » en anglais) sont des composés constitués d'ions métalliques ou de clusters coordonnés à des ligands organiques pour former des structures en une, deux ou trois dimensions, hautement poreuses. Ces composés comprennent un réseau de coordination dans lequel des agrégats d'atomes métalliques sont liés entre eux par des molécules organiques de manière à former un réseau dont la structure périodique à une, deux ou trois dimensions comporte des espaces vides pour permettre le stockage de gaz, et notamment de l'hydrogène gazeux.

Dans un mode de réalisation particulier, le système 2 de capture d'hydrogène gazeux peut comporter des charges absorbantes 5 dont certaines sont réalisées dans un premier matériau et d'autres sont réalisées dans un second matériau différent du premier matériau. Une réalisation à plus de deux matériaux différents est également envisageable.

Dans le cadre de la présente invention, le système 2 de capture d'hydrogène gazeux, c'est-à-dire les charges absorbantes 5, peut donc être agencé à différents endroits par rapport au réservoir 1. Sur les exemples des figures 1 à 3, les charges absorbantes 5 sont représentées schématiquement par des points.

Dans un premier mode de réalisation, le système 2 de capture d'hydrogène gazeux comprend des charges absorbantes 5 qui sont liées à au moins une partie de la paroi 3 du réservoir 1. Dans l'exemple représenté sur la figure 1 de ce premier mode de réalisation, les charges absorbantes 5 sont liées à toute la paroi 3 du réservoir 1, en étant noyées dans la matière 6 de la paroi 3. Dans cet exemple, les charges absorbantes 5 sont donc directement intégrées dans la paroi 3 du réservoir 1. On décrit ci-dessous différents modes d'intégration possibles dans le cas d'une paroi en matériau composite.

Dans une variante de réalisation de ce premier mode de réalisation, les charges absorbantes 5 peuvent également être intégrées dans la face externe 3A de la paroi 3. Dans ce cas, les charges absorbantes sont, de préférence, disséminées directement sur la face externe 3A de la paroi 3 du réservoir 1 avant la dernière étape de polymérisation de sorte que la surface externe 3A conserve un pouvoir d'adhérence pour permettre une adhérence suffisante des charges absorbantes 5.

Par ailleurs, dans un deuxième mode de réalisation, représenté sur la figure 2, en variante ou en complément du premier mode de réalisation, le système 2 de capture d'hydrogène gazeux comprend des charges absorbantes 5 qui sont liées à une peau (ou voile) 7 agencée sur au moins une partie de la face externe 3A de la paroi 3 du réservoir 1. Dans l'exemple de la figure 2, la peau 7 entoure toute la face externe 3A de la paroi 3. La peau 7 est, par exemple, réalisée en résine thermoplastique. Dans cet exemple, les charges absorbantes 5 sont donc directement intégrées dans la peau 7.

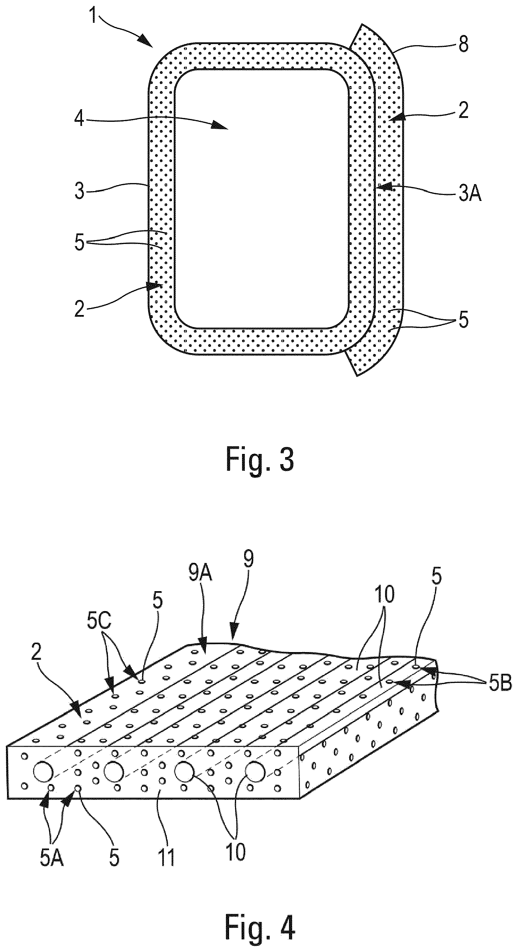

Par ailleurs, un troisième mode de réalisation, représenté sur la figure 3, s'applique à un réservoir 1 à hydrogène qui comporte une enveloppe 8 externe destinée à mettre en oeuvre une fonction auxiliaire. Dans une réalisation préférée, cette fonction auxiliaire est une fonction d'isolation thermique. Dans ce troisième mode de réalisation, le système 2 de capture d'hydrogène gazeux comprend des charges absorbantes 5 qui sont liées à ladite enveloppe 8 (de préférence d'isolation thermique). Dans l'exemple représenté sur la figure 3, l'enveloppe 8 couvre en partie la face externe 3A de la paroi 3 du réservoir 1. Dans une variante, l'enveloppe 8 peut couvrir toute la face externe 3A de la paroi 3 du réservoir 1.

Dans l'exemple représenté sur la figure 3, le réservoir 1 comporte un premier système 2 de capture d'hydrogène gazeux selon le troisième mode de réalisation qui est intégré dans l'enveloppe 8 externe, ainsi qu'un second système 2 de capture d'hydrogène gazeux selon le premier mode de réalisation qui est intégré dans la paroi 3 du réservoir 1.

Dans le cadre de la présente invention, on peut mettre en œuvre sur un réservoir 1 pour capter de l'hydrogène liquide, soit uniquement l'un quelconque des trois modes de réalisation précités, soit simultanément deux quelconques de ces modes de réalisation ou les trois modes de réalisation.

Par ailleurs, dans un mode de réalisation préféré, le réservoir 1 à hydrogène comporte au moins un matériau composite 9 représenté sur la figure 4. Le matériau composite 9 peut correspondre au matériau utilisé pour réaliser la paroi 3 du réservoir 1 et/ou au matériau utilisé pour réaliser l'enveloppe 8 externe (d'isolation thermique). Le matériau composite 9 comprend, de façon usuelle et non décrite davantage, des fibres 10 qui sont noyées dans une résine 11 par exemple en polymère thermoplastique ou thermodurcissable, comme représenté schématiquement sur la figure 4. Les fibres 10 peuvent former un renfort tissé ou non tissé (de fibres). Les fibres 10 peuvent correspondre, par exemple, à des fibres de carbone, de verre, ..., ou à des fibres naturelles telles que des fibres de lin.

Dans ce mode de réalisation préféré, le matériau composite 9 comporte des charges absorbantes 5 qui sont différenciées entre elles, en fonction de leur localisation dans le matériau composite 9, par l'ajout respectivement des lettres A, B et C. Les charges absorbantes 5 sont représentées par des ronds sur les figures 4 à 6.

Différentes réalisations sont envisageables pour la mise en œuvre de ce mode de réalisation préféré. Selon une première réalisation, des charges absorbantes 5A sont noyées dans la résine 11 du matériau composite 9, comme représenté sur la figure 4.

En outre, selon une deuxième réalisation, en variante ou en complément de la première réalisation, des charges absorbantes 5B sont intégrées dans des fibres 10 du matériau composite 9. Dans ce cas, les charges absorbantes 5B peuvent soit être intégrées dans la matière des fibres 10, soit être agencées à la surface des fibres 10.

Par ailleurs, selon une troisième réalisation, en variante ou en complément des première et/ou deuxième réalisations, des charges absorbantes 5C sont déposées sur au moins une surface 9A du matériau composite 9.

L'exemple de la figure 4 comprend donc simultanément ces trois modes de réalisation. Bien entendu, le matériau composite 9 peut comporter uniquement un seul de ces modes réalisation ou deux modes réalisation.

Dans un mode de réalisation particulier, pour permettre une bonne adhérence des charges absorbantes 5, notamment lorsqu'elles sont agencées à la surface du matériau considéré, par exemple à la surface 9A du matériau composite 9, les charges absorbantes 5 sont intégrées dans des particules (non représentées) de polymères thermodurcissables ou thermoplastiques. On obtient ainsi une bonne adhérence des charges absorbantes par l'intermédiaire de ces polymères.

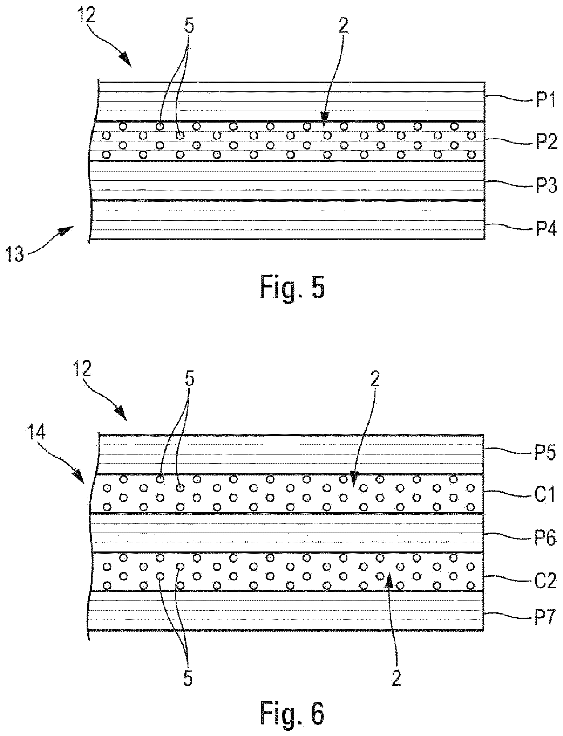

Par ailleurs, dans un mode de réalisation particulier qui s'applique plus particulièrement à l'enveloppe 8 externe (figure 3), bien qu'il puisse également s'appliquer à la paroi 3, on prévoit un composite stratifié 12 (figures 5 et 6) pourvu d'une ou plusieurs couches dites de composite. Chacune de ces couches de composite 13, 14 est formée, de façon usuelle, d'une pluralité de plis P1 à P4 (figure 5), P5 à P7 (figure 6), de préférence unidirectionnels.

Dans une première réalisation de ce mode de réalisation particulier, représentée sur la figure 5, des charges absorbantes 5 sont directement intégrées dans au moins l'un des plis, en l'occurrence dans le pli P2 de la couche de composite 13 du composite stratifié 12. Les charges absorbantes 5 sont directement intégrées à la matrice polymère constituant le pli P2 du composite stratifié 12.

En outre, dans une seconde réalisation de ce mode de réalisation particulier, représentée sur la figure 6, des charges absorbantes 5 sont intégrées dans au moins une couche dite absorbante C1, C2. Dans l'exemple de la figure 6, des charges absorbantes 5 sont intégrées, d'une part, dans la couche absorbante C1 qui est agencée entre les deux plis P5 et P6 successifs de la couche de composite 14 et d'autre part, dans la couche absorbante C2 qui est agencée entre les deux plis P6 et P7 successifs de la couche de composite 14. Les charges absorbantes 5 intégrées dans la couche C1 et/ou C2 pourraient également dévier d'éventuelles fissures apparaissant et agir ainsi comme une barrière contre la propagation de ces fissures, rendant la structure plus tolérante aux dommages.

Le nombre de couches absorbantes C1 et C2 est adapté pour optimiser la capacité de capture et/ou pour optimiser les propriétés globales du composite stratifié 12. L'épaisseur de chacune des couches absorbantes C1 et C2 et la densité de charges absorbantes 5 peuvent également être optimisées pour obtenir les capacités de capture recherchées et pour optimiser la tolérance aux dommages.

Pour la réalisation du composite stratifié 12, les charges absorbantes 5 peuvent être, soit directement déposées à la surface d'un pli unidirectionnel avant la réalisation du composite stratifié, soit intégrées préalablement dans un film ou voile polymère thermodurcissable ou thermoplastique qui est ensuite déposé sur un pli du composite stratifié 12 avant la stratification.

Dans le cas de l'application du composite stratifié 12 à l'enveloppe 8, les différentes couches constitutives de l'enveloppe 8 peuvent être séparées par une peau telle que la peau 7 (figure 2).

On réalise ainsi une fonctionnalisation du composite stratifié pour la capture d'hydrogène gazeux dans une application à un réservoir 1 de stockage d'hydrogène (à basse pression) en condition cryogénique. En particulier, on réalise des couches fonctionnalisées potentiellement intégrables en couche externe du composé stratifié ou au sein du composite stratifié pour la récupération de l'hydrogène gazeux libéré au droit des fissures transverses dans les plis adjacents.

Le système 2 de capture d'hydrogène gazeux (comprenant les charges absorbantes 5) présente l'avantage, d'une part, de pouvoir s'intégrer facilement sans ajout de dispositifs complexes (et lourds) tels que des pompes, un gaz vecteur et une canalisation, et d'autre part, s'intègre parfaitement au matériau composite. De plus, les couches intégrées dans le matériau composite présentent un avantage vis à vis de la tolérance aux dommages, en tant que barrière de déviation des fissurations transverses débouchantes au niveau des interfaces, et/ou par l'apport d'un polymère de nature thermoplastique avec des charges au niveau de l'interface.

Dans un mode de réalisation préféré, les charges absorbantes 5 sont réparties uniformément dans le matériau dans lequel elles sont intégrées, par exemple dans la résine 11 d'un matériau composite 9, dans la peau 7 ou dans l'enveloppe 8. Une telle répartition uniforme des charges absorbantes 5 permet d'optimiser et d'uniformiser les propriétés de capture du système 2.

De plus, dans un mode de réalisation particulier, la densité des charges absorbantes 5 est optimisée pour obtenir la capacité recherchée de capture du système 2 correspondant.

Afin de stopper le plus efficacement une fuite d'hydrogène, les charges absorbantes 5 sont, de préférence, concentrées dans le réservoir 1 ou au plus près du réservoir 1. Cependant, la capacité de capture (ou captation) des charges absorbantes 5 étant (notamment) fonction de la température, on agence de préférence les charges absorbantes 5 afin que leur capacité de capture soit la plus optimale possible.

Plus précisément, comme les charges absorbantes 5 présentent une efficacité variable en fonction de la température de leur environnement et comme généralement la température est également variable au niveau du réservoir 1 (et est comprise dans une gamme de températures connue), la température augmentant en s'écartant du réservoir 1 (à fonctionnement cryogénique), les charges absorbantes 5 sont agencées au niveau du réservoir 1 (notamment selon l'un des mode de réalisation décrits ci-dessus) à des localisations où la température est telle que lesdites charges absorbantes 5 présentent l'efficacité la plus élevée pour ladite gamme de températures.

Dans le cadre de la présente invention :
- le réservoir 1 est, de préférence, un réservoir comprenant une paroi 3 réalisée en un matériau composite, notamment stratifié, cette paroi 3 étant pourvue de préférence de charges absorbantes 5 selon l'un ou plusieurs des modes de réalisation décrits ci-dessus. Ce réservoir 1 peut également être pourvu d'une peau 7 avec des charges absorbantes 5 et/ou d'une enveloppe 8 (en particulier de protection thermique) avec des charges absorbantes 5 ;
- le réservoir 1 peut également comporter une paroi qui ne comprend pas de charges absorbantes 5, par exemple une paroi métallique. Dans ce cas, le système 2 (pourvu des charges absorbantes) peut être intégré dans une peau 7 et/ou dans une enveloppe 8 (en particulier de protection thermique) liées au réservoir 1.

La présente invention offre ainsi une grande variété de modes de réalisation différents possibles (qui sont, en plus, susceptibles d'être combinés) et, par conséquent, une grande flexibilité d'intégration des charges absorbantes 5 pour générer le ou les systèmes 2 de capture d'hydrogène gazeux associés au réservoir 1.

Les charges absorbantes 5, en plus de pouvoir capturer l'hydrogène gazeux et d'avoir une masse réduite, présentent également l'avantage de pouvoir libérer l'hydrogène gazeux préalablement capturé.

A cet effet, on prévoit également un procédé de restitution d'hydrogène gazeux. Ce procédé est configuré pour restituer l'hydrogène gazeux capturé par des charges absorbantes 5 du réservoir 1 tel que décrit ci-dessus.

Pour ce faire, ledit procédé comprend au moins une étape de restitution. Cette étape de restitution consiste à amener le système 1 de capture d'hydrogène gazeux pourvu des charges absorbantes 5, dans des conditions particulières générant automatiquement une libération de l'hydrogène gazeux capturé antérieurement par lesdites charges absorbantes 5. De préférence, on amène toute la partie du système ou de l'engin mobile, et notamment de l'aéronef, qui comporte le réservoir 1 dans ces conditions particulières.

L'étape de restitution comprend au moins l'un des opérations suivantes :
- une opération d'augmentation de la température ;
- une opération de réduction de la pression ;
- une opération de diffusion d'un gaz neutre ;
- une opération conduisant à la modification de la polarité de la paroi interne des pores des charges absorbantes 5 poreuses.

L'opération d'augmentation de la température consiste à augmenter la température de la partie précitée (comprenant le réservoir 1) à une température telle que les charges absorbantes 5 du système 2 libèrent directement l'hydrogène gazeux, capturé et stocké.

De même, l'opération de réduction de la pression consiste à réduire la pression de la partie précitée (comprenant le réservoir 1) à une pression telle que les charges absorbantes 5 du système 2 libèrent directement l'hydrogène gazeux, capturé et stocké. Cette réduction de la pression peut, par exemple, être obtenue en générant un léger vide au niveau de ladite partie ou simplement induite par la dépression engendrée par le déplacement de l'hydrogène sur la structure, lors notamment du décollage ou de l'atterrissage, ainsi que pour certaines phases de vol en liaison avec les conditions météorologiques.

En outre, concernant l'opération de diffusion, le gaz (de préférence un gaz neutre) est diffusé de manière à effleurer la surface du réservoir 1, de la peau 7 ou de l'enveloppe 8 externe (d'isolation thermique), de manière à libérer les atomes d'hydrogène des charges absorbantes 5. De préférence, on utilise un gaz qui ne réagit pas avec l'hydrogène et qui n'est pas dangereux pour l'homme et l'environnement. Ce gaz permet ainsi de dépolluer la surface de l'enveloppe 8 ou du réservoir 1.

Par ailleurs, on peut également réaliser une opération conduisant à la modification de la polarité de la paroi interne de pores des charges absorbantes 5. Cette modification est obtenue, soit par un changement de température, soit par l'action d'un courant électrique ou d'un champ magnétique.

L'hydrogène gazeux ainsi libéré par les charges absorbantes 5 du système 2, qui sont amenées dans des conditions appropriées, peut être libéré dans l'environnement, préalablement sécurisé. Ce procédé de restitution est par exemple réalisé, pour un réservoir à hydrogène d'un aéronef, au sol, après avoir vidé l'aéronef de ses passagers et l'avoir amené dans un endroit sécurisé ou avoir extrait le réservoir.

L'hydrogène gazeux, ainsi libéré par les charges absorbantes 5 du système 2, peut également être récupéré et réutilisé, par exemple pour alimenter une pile à combustible ou une batterie. Dans ce cas, on prévoit à l'étape de restitution des moyens permettant de capturer l'hydrogène gazeux libéré par les charges absorbantes 5 de manière à pouvoir le stocker pour le réutiliser.

## Revendications

1. Réservoir à hydrogène,
**caractérisé en ce qu'**il comporte au moins un système (2) de capture d'hydrogène gazeux pourvu de charges absorbantes (5) aptes à capturer de l'hydrogène gazeux, au moins certaines desdites charges absorbantes (5) étant liées à au moins une partie d'une paroi (3) du réservoir (1) ou à une peau (7) agencée sur au moins une partie d'une face externe (3A) du réservoir (1).

2. Réservoir à hydrogène selon la revendication 1,
**caractérisé en ce qu'**il comporte au moins une enveloppe (8) externe destinée à mettre en œuvre une fonction auxiliaire, et **en ce qu'**au moins certaines desdites charges absorbantes (5) sont liées à au moins une partie de ladite enveloppe (8) externe.

3. Réservoir à hydrogène selon l'une quelconque des revendications précédentes,
**caractérisé en ce qu'**il comporte au moins un matériau composite (9) pourvu de fibres (10) et **en ce qu'**au moins certaines desdites charges absorbantes (5B) sont intégrées dans au moins certaines des fibres (10) du matériau composite (9).

4. Réservoir à hydrogène selon l'une quelconque des revendications précédentes,
**caractérisé en ce qu'**il comporte au moins un matériau composite (9) pourvu de résine (11) et **en ce qu'**au moins certaines desdites charges absorbantes (5A) sont noyées dans la résine (11) du matériau composite (9).

5. Réservoir à hydrogène selon l'une quelconque des revendications précédentes,
**caractérisé en ce qu'**il comporte au moins un matériau composite (9) et **en ce qu'**au moins certaines desdites charges absorbantes (5C) sont déposées sur au moins une surface (9A) du matériau composite (9).

6. Réservoir à hydrogène selon l'une quelconque des revendications précédentes,
**caractérisé en ce qu'**il comporte au moins un composite stratifié (12) pourvu d'au moins une couche de composite (14) formée de plis (P5, P6, P7) et **en ce qu'**au moins certaines desdites charges absorbantes (5) sont intégrées dans au moins une couche absorbante (C1, C2) agencée entre deux plis successifs de la couche de composite (14).

7. Réservoir à hydrogène selon l'une quelconque des revendications précédentes,
**caractérisé en ce qu'**il comporte au moins un composite stratifié (12) pourvu d'au moins une couche de composite (13) formée de plis (P1, P2, P3, P4) et **en ce qu'**au moins certaines desdites charges absorbantes (5) sont intégrées dans au moins l'un desdits plis (P2).

8. Réservoir à hydrogène selon l'une quelconque des revendications précédentes,
**caractérisé en ce que** le système (2) de capture d'hydrogène gazeux comporte des particules de polymères thermodurcissables ou thermoplastiques qui comprennent au moins certaines desdites charges absorbantes (5).

9. Réservoir à hydrogène selon l'une quelconque des revendications précédentes,
**caractérisé en ce que** les charges absorbantes (5) sont réparties uniformément.

10. Réservoir à hydrogène selon l'une quelconque des revendications précédentes,
**caractérisé en ce que** les charges absorbantes (5) présentent une efficacité variable en fonction de la température, **en ce que** la température au niveau du réservoir (1) à hydrogène est variable et est comprise dans une gamme de températures, et **en ce que** les charges absorbantes (5) sont agencées au niveau du réservoir (1) à des localisations où la température est telle que les charges absorbantes (5) présentent l'efficacité la plus élevée pour ladite gamme de températures.

11. Réservoir à hydrogène selon l'une quelconque des revendications précédentes,
**caractérisé en ce que** les charges absorbantes (5) sont réalisées dans au moins l'un des matériaux suivants : des éléments carbonés poreux, des charpentes organiques métalliques, des charpentes organiques covalentes.

12. Procédé de restitution d'hydrogène gazeux capturé par des charges absorbantes d'un réservoir à hydrogène selon l'une quelconque des revendications 1 à 11,
**caractérisé en ce qu'**il comprend au moins une étape de restitution consistant à amener le système (2) de capture d'hydrogène gazeux pourvu des charges absorbantes (5) dudit réservoir (1) à hydrogène dans des conditions générant une libération de l'hydrogène gazeux absorbé antérieurement par lesdites charges absorbantes (5).

13. Procédé selon la revendication 12,
**caractérisé en ce que** l'étape de restitution comprend au moins l'une des opérations suivantes, mise en œuvre au moins sur le système (2) de capture d'hydrogène gazeux :
- une opération d'augmentation de la température ;
- une opération de réduction de la pression ;
- une opération de diffusion d'un gaz ;
- une opération conduisant à la modification de la polarité de la paroi interne de pores des charges absorbantes (5) poreuses..
